Europäisches Patentamt

European Patent Office

Office européen des brevets

(11) Veröffentlichungsnummer: **0 249 111 B1**

(12) **EUROPÄISCHE PATENTSCHRIFT**

(45) Veröffentlichungstag der Patentschrift: **11.08.93**

(21) Anmeldenummer: **87107843.2**

(22) Anmeldetag: **29.05.87**

(51) Int. Cl.⁵: **G05B 19/04**, G05B 19/08, H03M 11/00

(54) **Anordnung zur Umwandlung von Schalterkodierungen in Funktionsvorgaben.**

(30) Priorität: **09.06.86 DE 3619388**

(43) Veröffentlichungstag der Anmeldung:
**16.12.87 Patentblatt 87/51**

(45) Bekanntmachung des Hinweises auf die
Patenterteilung:
**11.08.93 Patentblatt 93/32**

(84) Benannte Vertragsstaaten:
**AT BE CH ES FR GB GR IT LI NL SE**

(56) Entgegenhaltungen:
**EP-A- 0 057 970**
**DE-A- 3 442 063**
**US-A- 4 275 464**
**US-A- 4 482 947**

(73) Patentinhaber: **Stein GmbH**
**Birkhahnweg 50b**
**W-8000 München 82(DE)**

(72) Erfinder: **Stein, Hermann**
**Birkhahnweg 50b**
**W-8000 München 82(DE)**

EP 0 249 111 B1

**Beschreibung**

Die Erfindung betrifft eine Anordnung zur Umwandlung von Schaltstufen vorgebenden Schalterkodierungen von Schaltern einer Steuerung in die den Schaltstufen zu zuordnenden Funktionsvorgaben, insbesondere zur Steuerung von Kranen.

Eine solche Anordnung ist aus der Deutschen Patentschrift 23 54 067 bekannt. Die Schaltstufen von Schaltern einer Funkfernsteuerung werden kodiert von einem Geber an einen Empfänger übertragen und dort über eine Relaisschaltung in die den Schaltstufen zu zuordnenden Funktionsvorgaben gewandelt (Spalte 5, Zeile 60 bis 67 und Spalte 8, Zeile 14 bis 46).

Es ist z.B. üblich, bei einer solchen Fernsteuerung für den Schalter eines Triebwerks eines Krans mit je 4 Geschwindigkeitsstufen in beiden Richtungen eine als "Steuersatz" bekannte Kodierung, die sich mit 4 Bits darstellen läßt, zu verwenden. In der Steuerung des Triebwerks wird diese Kodierung durch Hilfsrelais in die gewünschte Funktionsvorgabe umgesetzt. Diese kann z.B. eine Steuerschaltung sein, wie sie bei Kransteuerungen als Schaltung "ehk" bekannt ist. Eine Auswahl aus der möglichen Vielzahl solcher Steuerschaltungen für die Triebwerke von Kranen geht beispielsweise aus dem Katalog "Hebezeug-Schaltgeräte H3", 1979, Seite 2/21 ff der Firma Siemens AG hervor.

Auch ist es bei Funkfernsteuerungen von Kranen bekannt, die Schalterkodierungen mehrerer Triebwerke gemeinsam in einem Telegramm zu übertragen und auf der Empfangsseite das Telegramm in die Funktionsvorgabe der gesamten Kransteuerung einheitlich umzusetzen. In der Deutschen Patentschrift 23 54 067 ist beispielsweise in Spalte 8, Zeilen 14 bis 46 die gesamte Umsetzung eines seriell in einen Speicher eingelesenen Telegramms in eine Parallelausgabe auf Relais dargestellt.

Eine solche Umsetzung könnte auch durch einen Festwertspeicher geschehen. Bei der Vielzahl möglicher Funktionsvorgaben der einzelnen Triebwerke und deren Schalterkombinationen können nur einige wenige Umwandlungen in einfache Funktionsvorgaben in einen Festwertspeicher eingebracht werden. Eine Auswahl aus mehreren Steuerschaltungen ist so nicht möglich. Es ist daher in der Regel notwendig, die Umsetzung über kostenintensive Relaisverdrahtungen vorzunehmen.

Aus der Deutschen Offenlegungsschrift 34 23 819 ist bekannt, Funktionsvorgaben von Tasten in Abhängigkeit von vorangegangenen Tastenbetätigungen zeitlich zu ändern.

Der Erfindung liegt die Aufgabe zugrunde, eine Anordnung zur Umwandlung von Schaltstufen vorgebenden Schalterkodierungen von Schaltern einer Steuerung in die den Schaltstufen zu zuordnenden Funktionsvorgaben, insbesondere zur Steuerung von Kranen, anzugeben, bei der es möglich ist, praktisch alle gebräuchlichen Gruppen von Funktionsvorgaben in einen Speicher einzubringen und den Schaltern beliebig zuordnen zu können, um auf die Umsetzung durch Relaisverdrahtungen grundsätzlich verzichten zu können.

Diese Aufgabe wird erfindungsgemäß durch die kennzeichnenden Merkmale des Anspruchs 1 gelöst.

Bei ca. 100 verschiedenen Gruppen von Funktionsvorgaben, bzw. Steuerschaltungen für Krantriebwerke ergibt sich bei 4 Triebwerken allein schon eine zu hohe Anzahl an Kombinationen, um sie in einen Speicher einbringen zu können. Hinzu kommen noch die Kombinationen der Funktionsvorgaben der Nebenfunktionen einer Kransteuerung. Bei der Zuordnung gemäß der Erfindung sind lediglich die verschiedenen Gruppen von Funktionsvorgaben, nicht aber ihre Kombinationen in den Speicher einzubringen. Eine Änderung der Zuordnung zu den Schaltern ist durch eine Matrix auch nachträglich leicht möglich. Da auf eine zudem unwirtschaftliche Relaisumsetzung vollständig verzichtet werden kann, ist es auch möglich, aus der zeitlichen Folge von Funktionsvorgaben elektronisch Steuersequenzen abzuleiten, z.B. Zeitverzögerungen einzelner Funktionsausgaben, wobei die Vorgabe dieser zusätzlichen Steuersequenzen ebenfalls dem Speicher entnommen werden kann.

Nachfolgend wird die Erfindung anhand einer Zeichnung in einem Ausführungsbeispiel näher erläutert. Es zeigt:

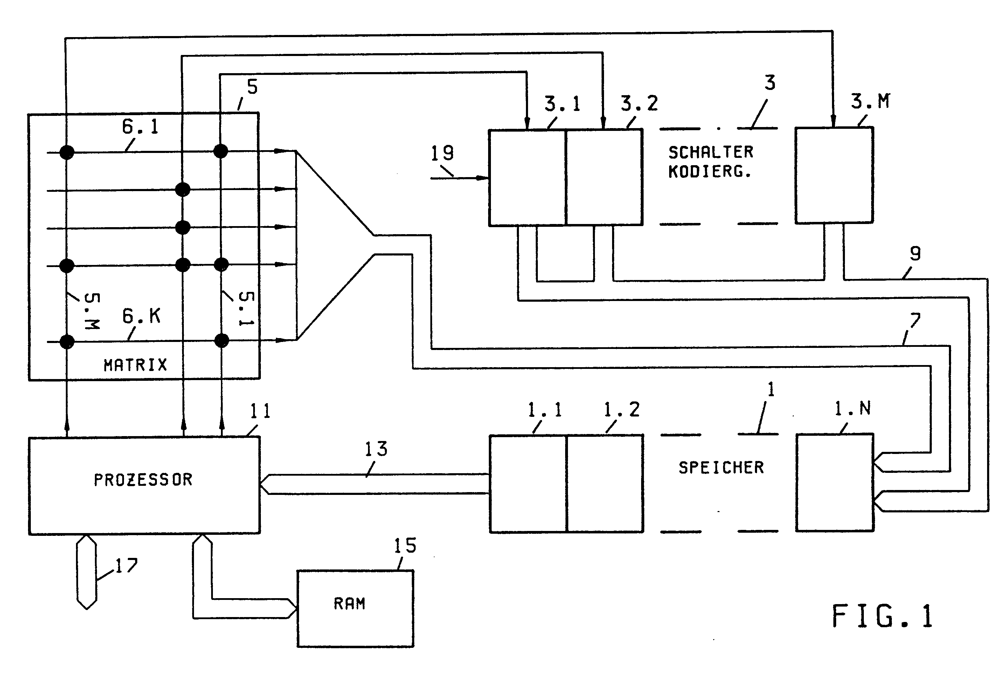

FIG. 1      ein Blockschaltbild eines Ausführungsbeispiels.

FIG. 1 zeigt beispielsweise das Blockschaltbild einer Anordnung zur Umwandlung von Schaltstufen vorgebenden Schalterkodierungen (3.1 bis 3.M) von Schaltern in entsprechende Funktionsvorgaben zur Steuerung eines Krans, wobei ein Prozessor (11) die sequenzielle Abfrage der Schaltstufen vorgebenden Schalterkodierung (3.1 bis 3.M) von Schaltern und die Zuordnung von Gruppen von Funktionsvorgaben (1.1 bis 1.N) über eine Matrix (5) vornimmt.

Die Gruppen der Funktionsvorgaben (1.1 bis 1.N) wie z.B. die nachstehend angeführten Steuerschaltungen "ehk" oder "etk" seien in dem Speicher (1) gruppenweise in Bereichen 1.1 bis 1.N eingespeichert, Steuerschaltung "ehk" beispielsweise im Speicherbereich 1.1. Die Schalter, bzw. deren die Schalterstufen vorgebenden Schalterkodierungen (3.1 bis 3.M) seien für jeden Schalter, bzw. Gruppe von Schaltern in Gruppen 3.1 bis 3.M unterteilt, wobei die Gruppe 3.1 z.B. die nachstehend dargestellten Schaltstufen vorgebende Schalterkodierung eines einzelnen Schalters bei den Schaltstufen, bzw. Stellungen HEBEN 4..1, Stillstand und SENKEN 1..4 eines Hubwerks darstellt.

```
 ----------------------------------------------------------------------
 Schaltstufen    ! Kodierung ! Funktionsvorgabe 1    ! Funktionsvorgabe 2
                 !           ! Gruppe "ehk"          ! Gruppe "etk"
                 ! a b c d   ! a b c d e f g h i k   ! a b c d e f g h i k l
 ----------------------------------------------------------------------
 HEBEN   Stufe 4 ! +     +   ! + +      + + +   + !    + + + +        +
               3 ! +   + +   ! + +      +   +   + !    +   + +        +
               2 ! +   +     ! + +      +   +   + !        + +        +
               1 ! +         ! +            +   + !        + + +
 Stillstand    0 !           ! +   +          + !                      +
               1 !   +       ! + +         +     !    +     + +
               2 !   + +     !   + +   +     + + !        + +   +
               3 !   + + +   !     +   + +   + + ! + +   + +        +
 SENKEN  Stufe 4 !   +   +   !     +   + +   + + ! + +            +
 ----------------------------------------------------------------------
```

Die Ausgänge 5.1 bis 5.M des Prozessors schalten sequenziell je eine Schaltstufen vorgebende Schalterkodierung (3.1 bis 3.M) von Schaltern auf einen Adressbus (9), der mit dem Speicher (1) verbunden ist. Diese durch die binären Muster der Schalterkodierung gebildeten Adressen (9) sind die sich in der Regel wiederholenden, den Schaltstufen der Schalter zugeordneten, "niedrigen" Adressen (9) innnerhalb der höheren Adressen (7) zugeordneten Gruppen von Funktionsvorgaben (1.1 bis 1.N) im Speicher (1) und adressieren die einzelnen Funktionsvorgaben innerhalb einer Gruppe von Funktionsvorgaben. Durch die Matrix (5) wird an den beispielhaft durch Kreise markierten Kreuzungspunkten von den spaltentförmigen Leitungen (5.1 bis 5.M) zu den zeilenförmigen Leitungen (6.1 bis 6.K) eine Gruppenadresse auf einen Adressbus (7) gegeben, der ebenfalls mit dem Speicher (1) verbunden ist, hier aber eine die Gruppe von Funktionsvorgaben 1.1 bis 1.N identifizierende "höhere" Adresse (7) vorgibt.

Die Kreuzungspunkte innerhalb der Matrix (5) können beispielsweise binäre Verknüpfungsglieder sein oder zweckmäßiger Dioden, die in Stecker eingebaut sind. So lassen sich die Zuordnungen in Form von "Kreuzungspunkten" leicht verändern.

Die durch die Kreuzungspunkte auf der mit der Schaltstufen vorgebenden Schalterkodierung 3.1 koinzidierenden Leitung 5.1 wird z.B. eine höhere Adresse (7) durch die zeilenförmigen Leitungen (6.1 bis 6.K) erzeugt, die die Gruppe der Funktionsvorgabe 1.1 im Speicher (1) anwählt. Somit wäre die oben dargestellte Schaltstufen vorgebende Schalterkodierung 3.1 der Gruppe der Funktionsvorgabe "ehk" (1.1) zugeordnet. Im Beispiel ist auch erkennbar, daß der Schaltstufen vorgebenden Schalterkodierung 3.M durch äqivalente Kreuzungspunkte auf der Leitung 5.M in der Matrix (5) die gleiche Gruppe der Funktionsvorgabe 1.1 zugeordnet ist. So kann eine beliebige Gruppe von Funktionsvorgaben, z.B. die Schaltung "etk" im Speicherbereich 1.N einem beliebigen Schalter zugeordnet werden. Mehrere Schalter mit Nebenfunktionen können innerhalb einer Gruppe 3.1 bis 3.M zusammengefaßt sein.

Die durch die höheren (7) und niedrigen Adressen (9) aus dem Speicher (1) auslesbaren Funktionsvorgaben (13) werden dem Prozessor (11) über einen Bus zugeleitet zur weiteren Steuerung des an einer Schnittstelle (17) des Prozessors angeschlossenen Geräts. Durch Zwischenspeicherung zeitlich vorhergehender Funktionsvorgaben in einen Schreib-/Lesespeicher (15) kann der Prozessor (11) Funktionsvorgaben (13) vergleichen und eine abweichende Steuersequenz veranlassen, deren Vorgabe ebenfalls im Speicher (1) abgelegt sein kann.

Die Funktionsvorgabe (13) kann neben den oben erwähnten einfachen Steuerschaltungen auch zeitliche Abläufe oder Abhängigkeiten von dritten Größen beinhalten, sodaß komplette Steuerungen aus bereits vorgegebenen dynamischen Funktionsvorgaben beliebig zusammengesetzt werden können, was auch hier die jedesmal wiederholte Programmierung überflüssig macht. Besonders zweckmäßig ist auch die Anwen-

3

dung bei einer Fernsteuerung, wobei die Schalterkodierungen in Form eines binären Telegramms auf einer Leitung (19) Serien-/Parallelwandlern (in 3.1 bis 3.M enthalten) zugeführt werden, wobei deren Ausgänge wieder die dargestellten Schaltstufen vorgebenden Schalterkodierungen (3.1 bis 3.M) bilden, z.B. in einem Binärkode wie dem GRAY-Kode.

**Patentansprüche**

1. Anordnung zur Umwandlung von Schaltstufen vorgebenden Schalterkodierungen (3.1 bis 3.M) von Schaltern einer Steuerung in die den Schaltstufen zu zuordnenden Funktionsvorgaben (13), insbesondere zur Steuerung von Kranen,
   **dadurch gekennzeichnet,**
   a) daß mehrere Gruppen aus gewünschten Funktionsvorgaben (1.1 bis 1.N) vorgesehen sind und jeweils gruppenweise in einem Speicher (1) durch je eine höhere Adresse (7) adressierbar gespeichert sind,
   b) daß eine beliebige Gruppe von Funktionsvorgaben (1.1 bis 1.N) der Schaltstufen vorgebenden Schalterkodierung (3.1 bis 3.M) jedes einzelnen Schalters und/oder einer Gruppe von Schaltern durch die von einer Matrix (5) wählbaren höheren Adresse (7) des Speichers (1) zugeordnet werden kann,
   c) daß die Schaltstufen vorgebende Schalterkodierungen (3.1 bis 3.M) der Schalter als Adressen dienen und als niedrige Adressen (9) auf den Speicher (1) innerhalb der höheren Adressen (7) zugreifen,
   d) daß die den Schaltstufen der Schalter zugeordnete Funktionsvorgabe (13) als Inhalt des Speichers (1) zur weiteren Steuerung durch die höheren (7) und niedrigen Adressen (9) ausgelesen werden kann.

2. Anordnung nach Anspruch 1, dadurch gekennzeichnet, daß jede gespeicherte Gruppe von Funktionsvorgaben (1.1 bis 1.N) einem Steuerwerk, insbesondere einem Steuerwerk für ein einzelnes Krantriebwerk, entspricht.

3. Anordnung nach Anspruch 1 oder 2, dadurch gekennzeichnet, daß die Matrix (5) eine Diodenmatrix ist.

4. Anordnung nach Anspruch 3, dadurch gekennzeichnet, daß die Spalten (5.1 bis 5.M) der Matrix (5) mit der Schaltstufen vorgebenden Schalterkodierung (3.1 bis 3.M) je eines einzelnen Schalters und/oder einer Gruppe von Schaltern koinzidieren und daß die Reihen (6.1 bis 6.K) der Matrix (5) die den Gruppen der Funktionsvorgaben (1.1 bis 1.N) innerhalb des Speichers (1) zugeordnete höhere Adresse (7) vorgeben.

5. Anordnung nach Anspruch 4, dadurch gekennzeichnet, daß die Ausgänge eines Prozessors (11) sequenziell auf die Spalten (5.1 bis 5.M) der Matrix (5) zugreifen und daß die Funktionsvorgabe (13) aus dem Speicher (1) an den Prozessor (11) zur Steuerung angeschlossener Geräte, insbesondere zur Steuerung von Krantriebwerken, geleitet werden.

6. Anordnung nach Anspruch 5, dadurch gekennzeichnet, daß der Prozessor (11) die jeweils letzte Funktionsvorgabe (13) in einen Schreib-/Lesespeicher (15) speichert und durch Vergleich mit der neuen Funktionsvorgabe (13) eine von der neuen Funktionsvorgabe (13) abweichende Steuersequenz veranlaßt, die ebenfalls im Speicher (1) vorgegeben ist.

**Claims**

1. Configuration for the conversion of switch codes (3.1 to 3.M) specifying switching steps in switches of a control unit into the functional specifications (13) to be allocated to the switching steps, especially for controlling cranes,
   characterised in that
   a) a plurality of groups of desired functional specifications (1.1 to 1.N) are provided and are stored in a memory (1) where they are addressable by one higher address (7) each,
   b) any desired group of functional specifications (1.1 to 1.N) can be allocated by the higher address (7) of the memory (1), which can be selected by a matrix (5), to the switch code (3.1 to 3.M) specifying switching steps in each separate switch and/or a group of switches,

EP 0 249 111 B1

c) the switch codes (3.1 to 3.M) specifying switching steps in the switches serve as addresses and, as lower addresses (9), access the memory (1) within the higher addresses (7),

d) the functional specification (13) allocated to the switching steps of the switches can be read out as the content of the memory (1) for further control by the higher (7) and lower addresses (9).

2. Configuration according to Claim 1, characterised in that each stored group of functional specifications (1.1 to 1.N) corresponds to a switching centre, and especially a switching centre for a single crane drive.

3. Configuration according to Claims 1 or 2, characterised in that the matrix (5) is a diode matrix.

4. Configuration according to Claim 3, characterised in that the columns (5.1 to 5.M) of the matrix (5) coincide in each case with the switch code (3.1 to 3.M) specifying switching steps in one single switch and/or a group of switches and that the rows (6.1 to 6.K) of said matrix (5) specify the higher address (7) allocated to the groups of functional specifications (1.1 to 1.N) within the memory (1).

5. Configuration according to Claim 4, characterised in that the output from a processor (11) sequentially accesses the columns (5.1 to 5.M) of the matrix (5) and that the functional specification (13) from the memory (1) is fed to the processor (11) to control any equipment connected up, and especially to control crane drives.

6. Configuration according to Claim 5, characterised in that the processor (11) stores the last functional specification (13) in each case in a read-write memory (15) and, by making a comparison with the new functional specification (13), triggers a control sequence, which is likewise specified in the memory (1) and which deviates from the new functional specification (13).

**Revendications**

1. Arrangement pour la conversion de codes d'actionneur (3.1 à 3.M) présélectionnant des positions de couplage d'actionneurs d'une commande en consignes fonctionnelles (13) à affecter aux positions de couplage, notamment pour la commande de grues,
**caractérisé en ce que,**
a) plusieurs groupes de consignes fonctionnelles souhaitées (1.1 à 1.N) sont prévus et mémorisés chacun dans une mémoire (1) par groupes de manière adressable par une adresse supérieure respectivement (7),
b) un groupe quelconque de consignes fonctionnelles (1.1 à 1.N) peut être affecté au code d'actionneur (3.1 a 3.M) présélectionnant les positions de couplage de chaque actionneur individuel et/ou d'un groupe d'actionneurs par l'adresse (7) de la mémoire (1) sélectionnable par une matrice (5),
c) les codes d'actionneur (3.1 à 3.M) des actionneurs présélectionnant les positions de couplage servent d'adresses et accident à la mémoire (1) comme adresses inférieures (9) dans les adresses supérieures (7),
d) la consigne fonctionnelle (13) affectée aux positions de couplage des actionneurs peut être lue comme contenu de la mémoire (1) pour continuer la commande par les adresses supérieures (7) et inférieures (9).

2. Arrangement selon la revendication 1, caractérisé en ce que chaque groupe de consignes fonctionnelles (1.1 a 1.N) mémorisé correspond à un organe de commande, notamment à un organe de commande pour un mécanisme de commande de grue unique.

3. Arrangement selon la revendication 1 ou 2, caractérisé en ce que la matrice (5) est une matrice à diodes.

4. Arrangement selon la revendication 3, caractérisé en ce que les entrefers (5.1 à 5.M) de la matrice (5) coïncident avec le code d'actionneur (3.1 à 3.M) présélectionnant les positions de consigne de chaque actionneur individuel et/ou d'un groupe d'actionneurs et que les rangées (6.1 à 6.K) de la matrice (5) prédéfinissent l'adresse supérieure (7) affectée aux groupes de consignes fonctionnelles (1.1 à 1.N) dans la mémoire (1).

5

5. Arrangement selon la revendication 4, caractérisée en ce que les sorties d'un processeur (11) ont accès séquentiellement aux entrefers (5.1 à 5.M) de la matrice (5) et que la consigne fonctionnelle (13) de la mémoire (1) est transmise au processeur (11) pour commander les appareils connectés, notamment pour commander les mécanismes de commande de grues.

6. Arrangement selon la revendication 5, caractérisée en ce que le processeur (11) mémorise chaque dernière consigne fonctionnelle (13) dans une mémoire de lecture/écriture (15) et, par comparaison avec la nouvelle consigne fonctionnelle (13), déclenche une séquence de commande différente de la nouvelle consigne fonctionnelle (13), qui est également prédéfinie dans la mémoire.

FIG. 1